# EUROPEAN PATENT APPLICATION

(11) **EP 1 562 389 A2**
(43) Date of publication of application: **10.08.2005**
(21) Application number: 05002161.7
(22) Date of filing: 02.02.2005
(51) Int. Cl.: H04Q 7/32

(54) **Cellular phone**

(30) Priority: 03.02.2004 JP 2004027281
(71) Applicant: NEC Corporation, Minato-ku, Tokyo 108-8001 (JP)
(72) Inventor: Nagashima, Yasutake, Minato-ku, 108-8001 (JP)
(74) Representative: VOSSIUS & PARTNER

(57) **Abstract**

The present invention provides a cellular phone that can update software with the latest software in a simple operation. A cellular phone (10) according to the present invention includes a cellular phone body (8) and a battery (9). The battery (9), which supplies battery power to the cellular phone body (8), can be connected to a battery charger (6). When connected to an external power supply (7) and the battery (9), the battery charger (6) charges the battery (9). The cellular phone body (8), which includes a software storage unit where software is stored, is connected to a management station terminal (1) via a wireless communication network (2). When the battery charger (6) is connected to the battery (9), the cellular phone body (8) sends an update request to the management station terminal (1) and stores the latest software, sent from the management station terminal (1), in the software storage unit as the software described above. This allows the user to update the software with the latest software in a simple operation. This simple operation only requires the user to connect the battery charger (6) to the battery (9).

## Description

The present invention relates to a cellular phone used as a mobile communication terminal.

The storage unit of a terminal such as a PC (Personal Computer) stores software that is executed by the CPU (Central Processing Unit) included in the terminal. The software stored in the terminal includes operation software, electronic mail software, game software, and anti-virus software. When a bug or a failure is detected in such software, the software must be subjected to maintenance service. In this case, maintenance of the software requires the user to update the software in the terminal with an upgraded correction software (latest software). One of the methods to update the software in a terminal with the latest software without going to a PC shop is to use a disc. A typical disc used for this purpose is a CD-ROM (Compact Disc-Read Only Memory).

A cellular phone used a mobile communication terminal is a computer in which the CPU is included as in the terminal described above. However, all cellular phone users are aware that the cellular phone is a telephone but unaware that the cellular phone is a computer. This is one of the reasons that the user feels the cellular phone easy to use and that the cellular phone has rapidly become popular.

The storage unit of the cellular phone stores software to be executed by the CPU included in the cellular phone. The software stored in the cellular phone includes operation software, communication software, electronic mail software, game software, anti spam mail software, and tamper resistant software. When a bug or a failure is detected in such software, the software must be subjected to maintenance service. In this case, maintenance of the software requires the user to update the software in the cellular phone with an upgraded correction software (latest software).

However, all cellular phone users cannot update the software in the cellular phone with the latest software by themselves without going to a cellular phone shop. Thus, some users go to a shop to replace the cellular phone with a new one or have the software updated in the shop. Unless a user goes to a shop, a problem (bug, failure) in the software stored in the cellular phone is not corrected.

Patent Documents relating to a cellular phone are as follows:
Patent Document 1 discloses a mobile communication terminal that reliably backs up information stored in a cellular phone with no user intervention.
Patent Document 2 discloses a data backup device that automatically backs up data stored in a cellular phone.
Patent Document 3 discloses a data backup system for a cellular phone. This system prevents data loss almost completely and allows the user to reuse data without intentionally executing backup processing and, at the same time, allows the user to take action for a cellular phone error or for cellular phone replacement.
Patent Document 4 discloses a portable terminal connection device that simplifies the procedure for updating data stored in a portable terminal.

[Patent Document 1] Japanese Patent Publication Kokai JP-A No. 2003-347988
[Patent Document 2] Japanese Patent Publication Kokai JP-A No. 2001-202292
[Patent Document 3] Japanese Patent Publication Kokai JP-A No. 2002-33798
[Patent Document 4] Japanese Patent Publication Kokai JP-A No. 2002-271248

It is an object of the present invention to provide a cellular phone that allows the user to easily update software with the latest software.

It is another object of the present invention to provide a cellular phone that allows the user to reliably update software with the latest software.

It is still another object of the present invention to provide a cellular phone that allows the user to easily back up user data.

It is still another object of the present invention to provide a cellular phone that allows the user to reliably back up user data.

It is still another object of the present invention to provide a cellular phone that allows even a user, who is unfamiliar with a computer, to use backed-up user data.

The following describes means for solving the problems using the numerals used in Description Of Preferred Embodiments. Those numerals are added to show the relation between the description in the claims and the description in [Description Of Preferred Embodiments]; those numerals should not be used in the interpretation of the technical scope of the present invention described in the Claims.

A cellular phone (10) according to a first aspect of the present invention is applied to a communication system described below. This communication system comprises the cellular phone (10) according to the present invention and a management station terminal (1) that provides a latest software in response to an update request.
The cellular phone (10) according to the present invention comprises a cellular phone body (8) and a battery (9). The battery (9), which supplies battery power to the cellular phone body (8), can be connected to a battery charger (6). When connected to an external power supply (7) and the battery (9), the battery charger (6) charges the battery (9).
The cellular phone body (8) comprises a software storage unit (33A) in which software is stored, a cellular phone communication unit (14) connectable to the management station terminal (1) via a wireless communication network (2), and an update control unit (31B).
When the battery charger (6) is connected to the battery (9), the update control unit (31B) sends an update request from a cellular phone communication unit (14) to the management station terminal (1) and stores the latest software, sent from the management station terminal (1) to the cellular phone communication unit (14), in the software storage unit (33A) as the software described above.

In the configuration described above, the cellular phone (10) according to the present invention gives a first effect that the user can update software with the latest software in a simple operation.
In addition to the first effect, the cellular phone (10) according to the present invention gives a second effect that software can be updated with the latest software reliably.

The first effect will be described.
There is a possibility that a problem (bug, failure) occurs in the software stored in the software storage unit (33A). In this case, maintenance of the software requires the user to update the software in the software storage unit (33A) of the cellular phone (10) with an upgraded correction software (latest software). According to the cellular phone (10) of the present invention, the software in the software storage unit (33A) is updated automatically with the latest software from the management station terminal (1) when the battery charger (6) is connected to the battery (9). This simple operation allows the user to update the software with the latest software. The simple operation only requires the user to connect the battery charger (6) to the battery (9).
The cellular phone (10) according to the present invention enables the user to simply update the software with the latest software, thus eliminating the need for user to go to a shop for replacing the cellular phone (10) with a new cellular phone. This reduces the cost required for correcting a failure (problem), for example, the cost required for going to a shop or replacing the cellular phone with a new one.
The cellular phone (10) is a computer in which the CPU (11) is included. However, though all users of the cellular phone (10) use the cellular phone (10) as a phone, not all users cannot use the cellular phone (10) as a computer. Among all users of the cellular phone (10), there must be some users who are unfamiliar with the operation of the cellular phone (10) as a computer. Thus, the cellular phone (10) according to the present invention allows the user to update the software with the latest software via a simple operation, eliminating the need for the user to detect a software problem (bug, failure).

The second effect will be described.
According to the cellular phone (10) of the present invention, the software in the software storage unit (33A) is updated automatically with the latest software from the management station terminal (1) when the battery charger (6) is connected to the battery (9). Usually, when connected to the external power supply (7) and to the battery (9), the battery charger (6) charges the battery (9). When the battery charger (6) and the battery (9) are connected, the battery charger (6) and external power supply (7) are not connected in some cases. The battery charger (6) and the external power supply (7) are not connected, for example, when the battery charger (6) is not connected correctly to the external power supply (7) or when the power from the external power supply (7) is not supplied to the battery charger (6) due to a power failure. In this case, when connected to the battery (9) but not to the external power supply (7), the battery charger (6) cannot charge the battery (9). As described above, according to the cellular phone (10) of the present invention, the software can be updated reliably with the latest software even if the battery charger 6 connected to the battery (9) is not charging the battery (9) when the battery charger (6) is connected to the battery (9).

The cellular phone (10) according to the present invention is applied to a communication system described below. This communication system comprises the cellular phone (10) according to the present invention, a management station terminal (1) that provides the latest software in response to an update request, and storage units (4, 5).
The cellular phone (10) according to the present invention comprises a cellular phone body (8) and a battery (9). The battery (9), which supplies battery power to the cellular phone body (8), can be connected to a battery charger (6). When connected to an external power supply (7) and the battery (9), the battery charger (6) charges the battery (9).
The cellular phone body (8) comprises a software storage unit (33A) in which software is stored, a cellular phone communication unit (14) connected to the management station terminal (1) via a wireless communication network (2), an update control unit (31B), a user data storage unit (33B) in which user data related to the user is stored, backup communication units (15-1, 15-2) connected to the storage units (4, 5), and a backup control unit (31C).
When the battery charger (6) is connected to the battery (9), the update control unit (31B) sends an update request from a cellular phone communication unit (14) to the management station terminal (1) and stores the latest software, sent from the management station terminal (1) to the cellular phone communication unit (14), in the software storage unit (33A) as the software described above.
When the battery charger (6) is connected to the battery (9), the backup control unit (31C) reads user data from the user data storage unit (33B), sends the data from the backup communication unit (15-1, 15-2) to the storage unit (4, 5), and stores the data.

In the configuration described above, the cellular phone (10) according to the present invention gives a third effect in addition to the first and second effects. The third effect is that user data can be backed up in a simple operation.
In addition, the cellular phone (10) according to the present invention gives a fourth effect in addition to the first to third effects. The fourth effect is that user data can be backed up reliably.
In addition, the cellular phone (10) according to the present invention gives a fifth effect in addition to the first to fourth effects. The fifth effect is that even users unfamiliar with a computer can use backed-up user data.

The third effect will be described.
Considering that a problem may occur in the cellular phone (10), user data stored in the user data storage unit (33B) must be backed up. According to the cellular phone (10) of the present invention, user data is read from the user data storage unit (33B) when the battery charger (6) is connected to the battery (9) and is automatically backed up into a storage unit (4, 5). This allows the user to back up user data in a simple operation. This simple operation only requires the user to connect the battery charger (6) to the battery (9). Of all users of the cellular phone (10), there must be some users who are unfamiliar with the operation of the cellular phone (10) as a computer. Even those users can back up user data in a simple operation simply by connecting the battery charger (6) to the battery (9).

The fourth effect will be described.
In the prior art described in Patent Document 1, the cellular phone backs up user data into the backup processing unit when the battery is charged with the battery charger. However, when the battery charger is not connected correctly to the external power supply or when the power from the external power supply is not supplied to the battery charger due to a power failure, the battery cannot be charged if the battery charger is connected to the battery but not to the external power supply. When the battery cannot be charged, the cellular phone cannot back up user data reliably.
By contrast, according to the cellular phone (10) of a second aspect of the present invention, user data is read from the user data storage unit (33B) and is automatically backed up into a storage unit (4, 5) even if the battery charger (6) is not charging the battery (9) when the battery charger (6) is connected to the battery (9). Thus, according to the cellular phone (10) of the present invention, user data can be backed up reliably when the battery charger (6) is connected to the battery (9).

The fifth effect will be described.
In the prior art described in Patent Documents 2-4, user data is backed up not with a general-purpose battery charger but with a special-purpose battery charger that is not for general purposes. When connected to the battery of a cellular phone, this special-purpose battery charger, which contains a memory, backs up user data into the memory of the special-purpose battery charger. Of all cellular phone users, there must be some users who are unfamiliar with a computer. Users who are unfamiliar with a computer cannot always use user data, stored in the memory of the special-purpose battery charger, using the special-purpose battery charger that is not for general purposes.
By contrast, according to the cellular phone (10) of a third aspect of the present invention, user data is backed up using the general-purpose battery charger (6) and the general-purpose storage units (4, 5). When the general-purpose battery charger (6) is connected to the battery (9), this cellular phone (10) reads user data from the user data storage unit (33B) and automatically backs it up into the general-purpose storage unit (4, 5). Thus, even those users who are unfamiliar with a computer can use user data stored in the storage unit (4, 5).

The cellular phone communication unit (14) is connected to another terminal via the wireless communication network (2).
If the cellular phone communication unit (14) is not communicating with another terminal when the battery charger (6) is connected to the battery (9), the update control unit (31B) sends an update request from the cellular phone communication unit (14) to the management station terminal (1) and stores the latest software, sent from the management station terminal (1) to the cellular phone communication unit (14), into the software storage unit (33A) as the software described above.

The cellular phone body (8) further comprises an operation unit (16) used by the user for operating the cellular phone body (8).
If the user is not operating the operation unit (16) and the cellular phone communication unit (14) is not communicating with another terminal when the battery charger (6) is connected to the battery (9), the update control unit (31B) sends an update request from the cellular phone communication unit (14) to the management station terminal (1) and stores the latest software, sent from the management station terminal (1) to the cellular phone communication unit (14), into the software storage unit (33A) as the software described above.

The cellular phone communication (transmission/reception) unit (14) is connected to another terminal via the wireless communication network (2).
If the cellular phone communication unit (14) is not communicating with another terminal when the battery charger (6) is connected to the battery (9), the update control unit (31B) sends an update request from the cellular phone communication unit (14) to the management station terminal (1) and stores the latest software, sent from the management station terminal (1) to the cellular phone communication unit (14), into the software storage unit (33A) as the software described above. The backup control unit (31C) reads user data from the user data storage unit (33B), sends the data from the backup communication unit (15-1, 15-2) to the storage unit (4, 5), and stores the data.

The cellular phone body (8) further comprises an operation unit (16) used by the user for operating the cellular phone body (8).
If the user is not operating the operation unit (16) and the cellular phone communication unit (14) is not communicating with another terminal when the battery charger (6) is connected to the battery (9), the update control unit (31B) sends an update request from the cellular phone communication unit (14) to the management station terminal (1) and stores the latest software, sent from the management station terminal (1) to the cellular phone communication unit (14), into the software storage unit (33A) as the software described above. The backup control unit (31C) reads user data from the user data storage unit (33B), sends the data from the backup communication unit (15-1, 15-2) to the storage unit (4, 5), and stores the data.

The storage unit (4) is an external terminal (4) connected to the backup communication unit (15-1) via the wireless network (3). The external terminal (4) comprises an external terminal storage unit (4A).
User data, sent from the backup communication unit (15-1) to the external terminal (4), is stored in the external terminal storage unit (4A) by the external terminal (4).

The backup communication unit (15-2) includes a memory card slot (54). The storage unit (5) is the memory card (5) mounted in the memory card slot (54). The memory card (5) comprises a memory card storage unit (5A).
User data, sent from the backup communication unit (15-2) to the memory card (5), is stored into the memory card storage unit (5A) by the backup control unit (31C).

The backup communication unit (15-1, 15-2) includes the memory card slot (54). The storage (4, 5) includes the external terminal (4) and the memory card (5). The external terminal (4), connected to the backup communication unit (15-1, 15-2) via the wireless network (3), comprises the external terminal storage unit (4A). The memory card (5), mountable into the memory card slot (54), comprises the memory card storage unit (5A).
If the cellular phone communication unit (14) is not communicating with another terminal and the memory card (5) is not mounted in the memory card slot (54) when the battery charger (6) is connected to the battery (9), the backup control unit (31C) reads user data from the user data storage unit (33B) and sends the data to the external terminal (4) via the backup communication unit (15-1). The user data, sent from the backup communication unit (15-1) to the external terminal (4), is stored into the external terminal storage unit (4A) by the external terminal (4).
If the cellular phone communication unit (14) is not communicating with another terminal and the memory card (5) is mounted in the memory card slot (54) when the battery charger (6) is connected to the battery (9), the backup control unit (31C) reads user data from the user data storage unit (33B), sends the data to the memory card (5) via the backup communication unit (15-2), and stores the data in the memory card storage unit (5A).

The backup communication unit (15-1, 15-2) includes the memory card slot (54). The storage (4, 5) includes the external terminal (4) and the memory card (5). The external terminal (4), connected to the backup communication unit (15-1, 15-2) via the wireless network (3), comprises the external terminal storage unit (4A). The memory card (5), mountable into the memory card slot (54), comprises the memory card storage unit (5A).
If the user is not operating the operation unit (16), the cellular phone communication unit (14) is not communicating with another terminal, and the memory card (5) is not mounted in the memory card slot (54) when the battery charger (6) is connected to the battery (9), the backup control unit (31C) reads user data from the user data storage unit (33B) and sends the data to the external terminal (4) via the backup communication unit (15-1). The user data, sent from the backup communication unit (15-1) to the external terminal (4), is stored into the external terminal storage unit (4A) by the external terminal (4).
If the user is not operating the operation unit (16), the cellular phone communication unit (14) is not communicating with another terminal, and the memory card (5) is mounted in the memory card slot (54) when the battery charger (6) is connected to the battery (9), the backup control unit (31C) reads user data from the user data storage unit (33B), sends the data to the memory card (5) via the backup communication unit (15-2), and stores the data in the memory card storage unit (5A).

The wireless network (3) comprises a W-LAN (Wireless Local Area Network).

The wireless network (3) can use the Bluetooth system.
The meritorious effects of the present invention are summarized as follows.

As described above, the cellular phone according to the present invention allows the user to easily update software with the latest software.

The cellular phone according to the present invention allows the user to reliably update software with the latest software.

The cellular phone according to the present invention allows the user to easily back up user data.

The cellular phone according to the present invention allows the user to reliably back up user data.

The cellular phone according to the present invention allows even a user, who is unfamiliar with a computer, to use backed-up user data.
Preferred embodiments of a cellular phone according to the present invention will be described with reference to the drawings.
FIG. 1 is a diagram showing the configuration of a communication system to which a cellular phone 10 according to the present invention is applied.
FIG. 2 is a diagram showing the configuration of the cellular phone 10 according to the present invention.
FIG. 3 is a diagram showing the configuration of a setting memory 33 in a cellular phone body 8 of the cellular phone 10 according to the present invention.
FIG. 4 is a diagram showing a software storage unit 33A of the setting memory 33 in the cellular phone body 8 of the cellular phone 10 according to the present invention.
FIG. 5 is a diagram showing a user data storage unit 33B of the setting memory 33 in the cellular phone body 8 of the cellular phone 10 according to present invention.
FIG. 6 is a diagram showing the configuration of control programs stored in a ROM 31 in the cellular phone body 8 of the cellular phone 10 according to the present invention.
FIG. 7 is a diagram showing a backup location setting unit 31E in the ROM 31 in the cellular phone body 8 of the cellular phone 10 according to the present invention.
FIG. 8 is a diagram showing a management station terminal storage unit 1A of a management station terminal 1.
FIG. 9 is a flowchart showing update processing executed as an operation of the cellular phone 10 according to the present invention.
FIG. 10 is a flowchart showing external terminal backup processing that is backup processing executed as an operation of the cellular phone 10 according to the present invention.
FIG. 11 is a flowchart showing memory card backup processing that is backup processing executed as an operation of the cellular phone 10 according to the present invention.
FIG. 12 is a flowchart showing selection backup processing that is backup processing executed as an operation of the cellular phone 10 according to the present invention.

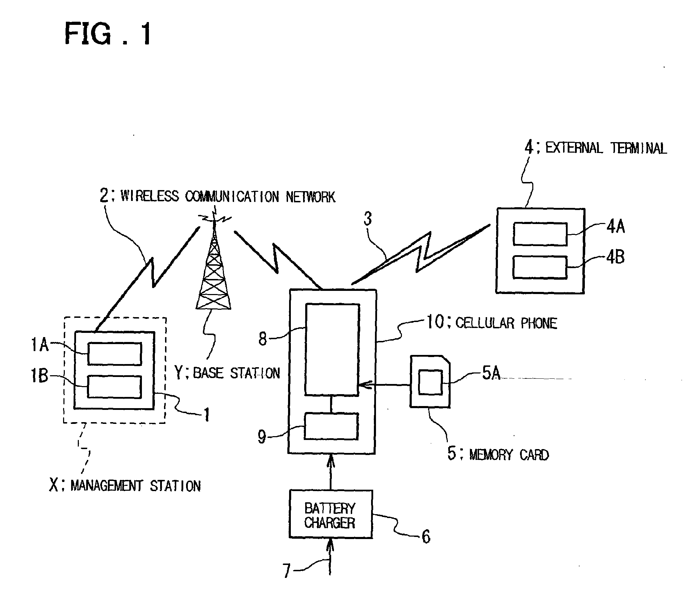

FIG. 1 shows the configuration of a communication system to which a cellular phone 10 according to the present invention is applied. This communication system comprises a cellular phone 10, a management station terminal 1, a wireless communication network 2, a wireless network 3, an external terminal 4, a memory card 5, and a battery charger 6.

The cellular phone 10, which is commercially available, is used by a user who purchased it. The cellular phone 10 comprises a cellular phone body 8 and a battery 9. The battery 9, which supplies battery power to the cellular phone body 8, can be connected to the battery charger 6. A setting memory (described later) of the cellular phone body 8 stores software and user-related user data (including data stored by user operation).

The battery charger 6, which is commercially available in conjunction with the cellular phone 10, is used by the user who purchased the cellular phone 10. The battery charger 6, a general-purpose charger, can be connected to an external power supply 7 (for example, commercial power) and to the battery 9. When connected to the external power supply 7 and the battery 9, the battery charger 6 charges the battery 9.

The cellular phone 10 is connected to the wireless communication network 2. The wireless communication network 2 includes base station Y. The cellular phone 10 can communicate with another terminal (not shown) via the wireless communication network 2. The management station terminal 1 is connected to the wireless communication network 2.

The management station terminal 1 is used by management station X. The management station terminal 1, which comprises a computer, comprises a management station terminal storage unit 1A and a management station terminal execution unit 1B that includes the CPU (Central Processing Unit). The operator of the management station X executes the management station terminal execution unit 1B to store the latest software into the management station terminal storage unit 1A. The "latest software" refers to a software which is later one than a software stored in the setting memory of the cellular phone body 8 of the cellular phone 10. There is a possibility that a problem (bug, failure) occurs in the software stored in the setting memory of the cellular phone body 8. Therefore, to make maintenance of the software, the software stored in the setting memory of the cellular phone body 8 must be updated by the upgraded correction software (i.e., latest software). When the battery charger 6 is connected to the battery 9, the cellular phone body 8 can update the software with the latest software from the management station terminal 1.

The cellular phone 10 is sometimes connected to the wireless network 3. The external terminal 4 is connected to the wireless network 3. An example of the wireless network 3 is a W-LAN (Wireless Local Area Network). The Bluetooth system can be applied to the wireless network 3.

The external terminal 4, a general-purpose terminal, is used by the user. The external terminal 4, which comprises a computer, comprises an external terminal storage unit 4A and an external terminal execution unit 4B that includes a CPU. When the external terminal 4 is used as a storage unit with the battery charger 6 connected to the battery 9, the cellular phone body 8 can back up user data, stored in the setting memory of the cellular phone body 8, into the external terminal 4. In this case, the external terminal execution unit 4B of the external terminal 4 stores user data, received from the cellular phone 10, into the external terminal storage unit 4A.

The cellular phone body 8 of the cellular phone 10 sometimes has a memory card slot (described later) in which a memory card 5 is mounted (inserted) as an option. The memory card 5 is commercially available (or commercially available in conjunction with the cellular phone 10) and is used by the user who purchased the memory card 5. The memory card 5, a general-purpose memory card, comprises a memory card storage unit 5A. When the memory card 5 is used as a storage unit with the battery charger 6 connected to the battery 9, the cellular phone body 8 can back up user data, stored in the setting memory of the cellular phone body 8, into the memory card 5. In this case, the user data is stored in the memory card storage unit 5A of the memory card 5.

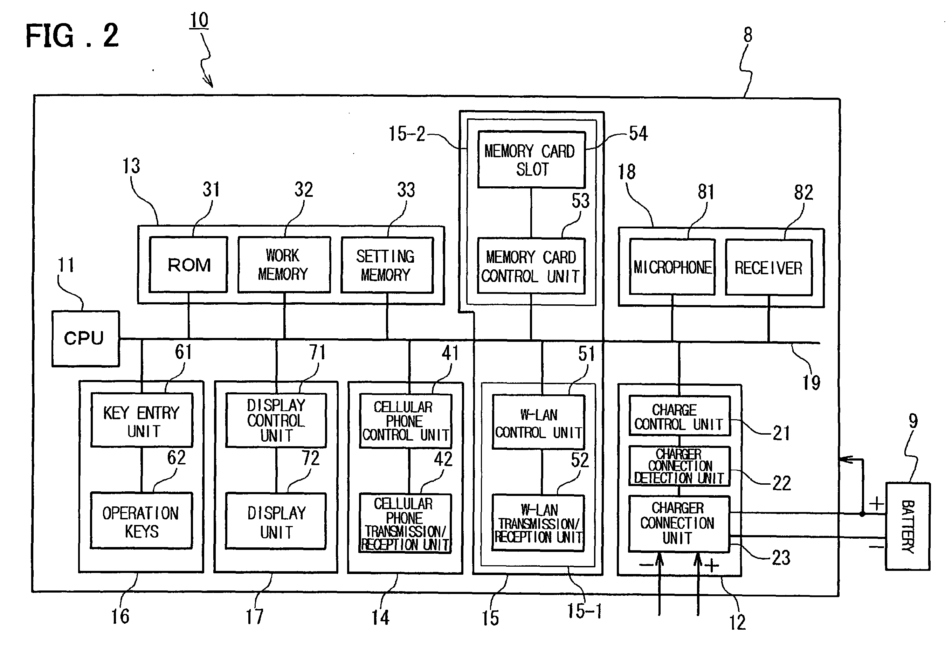

FIG. 2 shows the configuration of an embodiment of the cellular phone 10 according to the present invention. The cellular phone body 8 of the cellular phone 10 comprises a CPU 11, a battery power control unit 12, a cellular phone storage unit 13, a cellular phone communication unit 14, a backup communication unit 15, an operation unit 16, a display unit 17, a transmitter/receiver 18, and a bus 19. The CPU 11 is connected to the bus 19.

The battery power control unit 12 comprises a charge control unit 21 and a charger connection detection unit 22. The charger connection detection unit 22 is connected to the bus 19. A charger connection unit 23 is connected to the charger connection detection unit 22. The battery 9 is connected to the charger connection unit 23. This battery 9 supplies battery power (DC voltage) to the cellular phone body 8 as described above.
The charger connection unit 23 is a connection unit that connects to the connector or desktop holder of the battery charger 6, and the battery 9 is connected to the battery charger 6 via the charger connection unit 23. The battery charger 6 converts the external power supply 7 (commercial power supply) from a first power (AC voltage) to a second power (DC voltage). When connected to the external power supply 7 and to the battery 9, the battery charger 6 supplies the second power (DC voltage) to the battery 9 via the charger connection unit 23 to charge the battery 9. The charger connection detection unit 22 detects whether the battery charger 6 is connected to the charger connection unit 23. When the battery charger 6 is connected to the charger connection unit 23, the charger connection detection unit 22 outputs a charger connection detection signal to the CPU 11 to indicate that the battery charger 6 is connected to the charger connection unit 23.

The cellular phone storage unit 13 comprises a ROM (Read Only Memory) 31, a work memory 32, and a setting memory 33 that is the setting memory described above. The ROM 31, the work memory 32, and the setting memory 33 are connected to the bus 19.
The ROM 31 stores control programs that are fixed computer programs executed by the CPU 11. The control programs include computer programs for software updating and for backing up user data.
The work memory 32, composed of RAM (Random Access Memory), stores data temporarily required by the CPU 11 to execute computer programs. The data is lost when the power of the cellular phone 10 (cellular phone body 8) is turned off.
The setting memory 33 stores the software and user data described above in response to an instruction from the CPU 11. The software and user data stored in this setting memory 33, composed of nonvolatile memory, are not lost even when the power of the cellular phone 10 (cellular phone body 8) is turned off.

The cellular phone communication unit 14 comprises a cellular phone control unit 41 and a cellular phone transmission/reception unit (communication unit) 42. The cellular phone control unit 41 is connected to the bus 19. The cellular phone transmission/reception unit 42 is connected to the cellular phone control unit 41. The management station terminal 1 or another terminal (not shown) is connected to the cellular phone transmission/reception unit 42 via the wireless communication network 2.
The cellular phone transmission/reception unit 42 is composed of circuits for data transmission/reception to and from the wireless communication network 2 and an antenna. When communication is carried out between the cellular phone transmission/reception unit 42 and another terminal via the wireless communication network 2, the cellular phone transmission/reception unit 42 sends and receives data such as voices and electronic mail to and from the wireless communication network 2. The cellular phone control unit 41 causes the cellular phone transmission/reception unit 42 to send data in response to an instruction from the CPU 11. The cellular phone control unit 41 causes the cellular phone transmission/reception unit 42 to receive data and output it to the CPU 11.

The backup communication unit 15 comprises a W-LAN backup communication unit 15-1 and a memory card backup communication unit 15-2.

The W-LAN backup communication unit 15-1 comprises a W-LAN control unit 51 and a W-LAN transmission/reception unit 52.
The W-LAN control unit 51 is connected to the bus 19. The W-LAN transmission/reception unit 52 is connected to the W-LAN control unit 51. The external terminal 4 is connected to the W-LAN transmission/reception unit 52 via the wireless network 3. The W-LAN transmission/reception unit 52 is a circuit that sends and receives data to and from the wireless network 3. The W-LAN control unit 51 causes the W-LAN transmission/reception unit 52 to send data in response to an instruction from the CPU 11. The W-LAN control unit 51 causes the W-LAN transmission/reception unit 52 to receive data and output it to the CPU 11.

The memory card backup communication unit 15-2 comprises a memory card control unit 53 and a memory card slot 54 that is the memory card slot described above.
The memory card control unit 53 is connected to the bus 19. The memory card slot 54 is connected to the memory card control unit 53. The memory card 5 is mounted (inserted) into the memory card slot 54. The memory card control unit 53 outputs the insertion detection signal, which indicates that the memory card 5 is inserted into the memory card slot 54, to the CPU 11. When the memory card 5 is inserted into the memory card slot 54, the memory card control unit 53 sends (writes) data to the memory card 5 in response to an instruction from the CPU 11. When the memory card 5 is inserted into the memory card slot 54, the memory card control unit 53 reads data from the memory card 5 in response to an instruction from the CPU 11.

The operation unit 16 comprises a key entry unit 61 and operation keys 62. The key entry unit 61 is connected to the bus 19. The operation keys 62 are connected to the key entry unit 61. The operation keys 62 are an input device used for the telephone operation, electronic mail operation, and user setting. The key entry unit 61 accepts a key entry via the operation keys 62 and outputs a signal, which indicates that a key is pushed, to the CPU 11.

The display unit 17 comprises a display control unit 71 and a display unit 72. The display control unit 71 is connected to the bus 19. The display unit 72 is connected to the display control unit 71. The display control unit 71 causes the display unit 72 to display data (including user data and software execution status data) in response to an instruction from the CPU 11. The display unit 72 is a display device for displaying the operation status of the cellular phone 10, the electronic mail editing screen, and the user setting. This display device is, for example, a monochrome or color liquid crystal panel and an organic EL (organic electro-luminescence).

The transmitter/receiver 18 comprises a microphone 81 and a receiver 82. The microphone 81 and the receiver 82 are connected to the bus 19. The microphone 81 and the receiver 82 are used for making a call via the cellular phone.

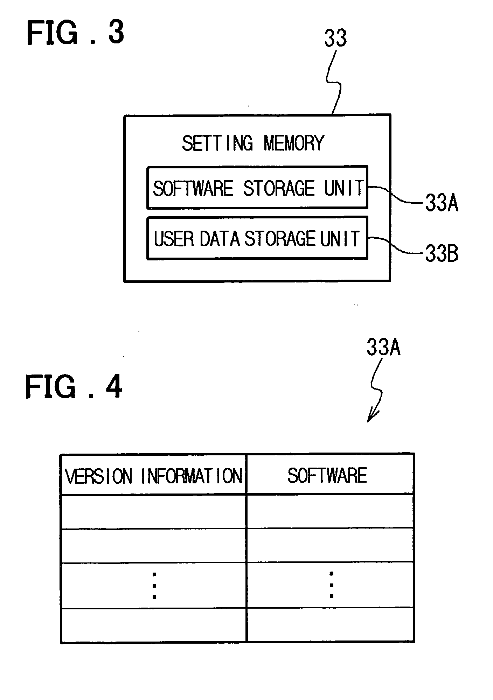

FIG. 3 shows the configuration of the setting memory 33 in the cellular phone body 8 of the cellular phone 10 according to the present invention. The setting memory 33 comprises a software storage unit 33A and a user data storage unit 33B.

FIG. 4 shows an embodiment of the software storage unit 33A of the setting memory 33 in the cellular phone body 8 of the cellular phone 10 according to the present invention. The software storage unit 33A stores the name of software and its corresponding version information that is a software identifier. Examples of software are communication software, electronic mail software, game software, anti spam mail software, and tamper resistance software.
The communication software is a computer program used by a user for making a telephone call using the cellular phone 10. The version information on the communication software is represented, for example, by "A1" created by combining the program identifier "A" indicating the communication software and the number identifier "1" indicating the communication software version.
The electronic mail software is a computer program used by a user for sending and receiving electronic mail using the cellular phone 10. The version information on the electronic mail software is represented, for example, by "B1" created by combining the program identifier "B" indicating the electronic mail software and the number identifier "1" indicating the electronic mail software version.
The game software is a computer program used by a user for playing a game using the cellular phone 10. The version information on the game software is represented, for example, by "C1" created by combining the program identifier "C" indicating the game software and the number identifier "1" indicating the game software version.
The anti spam mail software is a computer program for preventing spam mail. The prevention of spam mail is performed, for example, by rejecting the reception of a mail. The version information on the anti spam mail software is represented, for example, by "D1" created by combining the program identifier "D" indicating the anti spam mail software and the number identifier "1" indicating the anti spam mail software version.
The tamper resistant software is a computer program for preventing unwanted phone calls. The prevention of unwanted phone calls is performed, for example, by rejecting the reception of a call. The version information on the tamper resistant software is represented, for example, by "E1" created by combining the program identifier "E" indicating the tamper resistant software and the number identifier "1" indicating the tamper resistant software version.

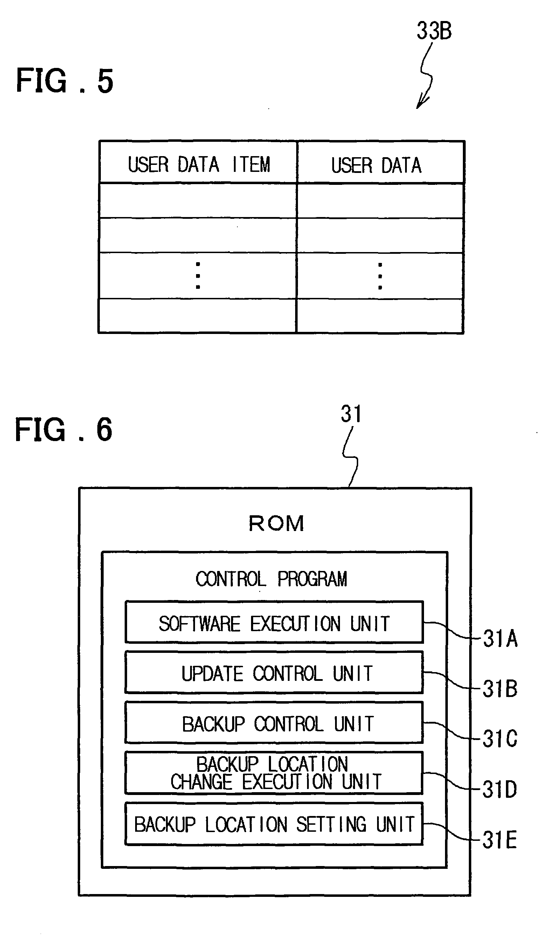

FIG. 5 shows the user data storage unit 33B of the setting memory 33 in the cellular phone body 8 of the cellular phone 10 according to the present invention. The user data storage unit 33B stores user data and its corresponding user data item that is the identifier of the user data. A user data item is represented by a setting value optionally set by the user through the operation unit 16 or, if no value is set, represented by a default value. Examples of the user data are screen data, ringing tone data, and text data. The screen data includes data indicating a screen (standby screen) displayed on the display unit 17 when the user does not operate the operation unit 16 and data indicating a screen image (shot) (attachment image) attached to an electronic mail. When the cellular phone body 8 has a camera and the user captures a picture using the camera via the operation unit 16, the data representing the image is included in the image data (standby image, attachment image). The ringing tone melody data is data used for notifying the user by outputting a melody as a ringing tone when the cellular phone communication unit 14 recognizes an incoming call (telephone call or electronic mail is received). The text data is data representing sentences such as those used in the web, Internet, and electronic mail.
The user data storage unit 33B further stores the address of the external terminal 4, though not shown, used as the backup destination.

FIG. 6 shows the configuration of the control programs stored in the ROM 31 in the cellular phone body 8 of the cellular phone 10 according to the present invention. The control programs stored in the ROM 31 are computer programs such as a software execution unit 31A, an update control unit 31B, a backup control unit 31C, a backup location change execution unit 31D, and a backup location setting unit 31E.

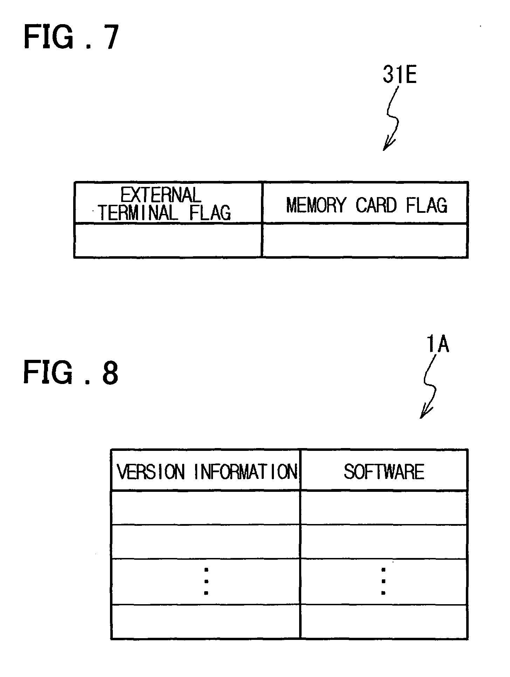

FIG. 7 shows the backup location setting unit 31E of the ROM 31 in the cellular phone body 8 of the cellular phone 10 according to the present invention. An external terminal flag and a memory card flag are set in the backup location setting unit 31E.

As shown in FIG. 6, the software execution unit 31A is a program used by the CPU 11 to execute software stored in the software storage unit 33A. The user data stored in the user data storage unit 33B includes user data generated by the software execution unit 31A.
The update control unit 31B is started by the CPU 11 in response to a charger connection detection signal from the charger connection detection unit 22. This update control unit 31B is a program for executing update processing. Update processing refers to processing executed by the CPU 11 (update control unit 31B) to update software with the latest software (hereinafter called update processing).
The backup control unit 31C is started by the CPU 11 in response to a charger connection detection signal from the charger connection detection unit 22. This backup control unit 31C comprises a program for executing backup processing. The backup processing includes external terminal backup processing, memory card backup processing, and selection backup processing. The external terminal backup processing refers to a processing, executed by the CPU 11 (backup control unit 31C), for backing up user data stored in the user data storage unit 33B into the external terminal storage unit 4A of the external terminal 4 according to an external terminal flag set in the backup location setting unit 31E. The memory card backup processing refers to a processing, executed by the CPU 11 (backup control unit 31C), for backing up user data stored in the user data storage unit 33B into the memory card storage unit 5A of the memory card 5 according to the memory card flag set in the backup location setting unit 31E. The selection backup processing refers to a processing, executed by the CPU 11 (backup control unit 31C), for backing up user data stored in the user data storage unit 33B into the external terminal storage unit 4A of the external terminal 4 or into the memory card storage unit 5A of the memory card 5 according to the external terminal flag and the memory card flag set in the backup location setting unit 31E.
The backup location change execution unit 31D comprises a program for setting flags (external terminal flag, memory card flag) in the backup location setting unit 31E according to the operation by the user through the operation unit 16.

FIG. 8 shows the management station terminal storage unit 1A of the management station terminal 1. The management station terminal storage unit 1A stores the name of software and its corresponding version information that is a software identifier. Examples of the software include communication software, electronic mail software, game software, anti spam mail software, and tamper resistance software. The software and the version information stored in the management station terminal storage unit 1A include the latest software and the latest software version information (latest version information), respectively. In addition, the software and the software version information stored in the management station terminal storage unit 1A include the software and the version information stored in the software storage unit 33A of the setting memory 33 in the cellular phone body 8, respectively.
When the management station terminal storage unit 1A stores the latest communication software, the latest communication software version information is represented, for example, by "A2" created by combining the program identifier "A" indicating the communication software and the number identifier "2" indicating the latest version of the communication software.
When the management station terminal storage unit 1A stores the latest electronic mail software, the latest electronic mail software version information is represented, for example, by "B2" created by combining the program identifier "B" indicating the electronic mail software and the number identifier "2" indicating the latest version of the electronic mail software.
When the management station terminal storage unit 1A stores the latest game software, the latest game software version information is represented, for example, by "C2" created by combining the program identifier "C" indicating the game software and the number identifier "2" indicating the latest version of the game software.
When the management station terminal storage unit 1A stores the latest anti spam mail software, the latest anti spam mail software version information is represented, for example, by "D2" created by combining the program identifier "D" indicating the anti spam mail software and the number identifier "2" indicating the latest version of the anti spam mail software.
When the management station terminal storage unit 1A stores the latest tamper resistant software, the latest tamper resistant software version information is represented, for example, by "E2" created by combining the program identifier "E" indicating the tamper resistant software and the number identifier "2" indicating the latest version of the tamper resistant software.

Next, the operation of the cellular phone 10 according to the present invention will be described. The operation of the cellular phone 10 includes update processing and backup processing (external terminal backup processing, memory card backup processing, and selection backup processing).
In the description below, it is assumed that the cellular phone 10 executes backup processing after executing update processing.

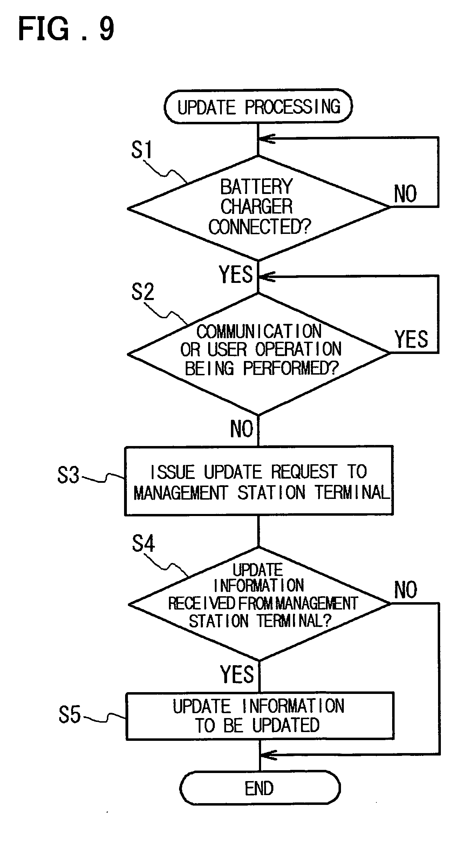

First, the update processing will be described. FIG. 9 is a flowchart showing the update processing that is one of operations of the cellular phone 10 according to the present invention.

The charger connection detection unit 22 of the battery power control unit 12 detects whether the user connects the battery charger 6 to the charger connection unit 23 (step S1). When the battery charger 6 is connected to the charger connection unit 23, the charger connection detection unit 22 outputs the charger connection detection signal to the CPU 11 while the battery charger 6 remains connected to the charger connection unit 23 (YES in step S1). In response to the charger connection detection signal from the charger connection detection unit 22 when control is passed to YES in step S1, the CPU 11 starts the update control unit 31B stored in the ROM 31.

The update control unit 31B detects whether the cellular phone communication unit 14 is communicating with another terminal (step S2). If the cellular phone communication unit 14 is communicating with another terminal (YES in step S2), the update control unit 31B executes step S2 until the communication between the cellular phone communication unit 14 and the other terminal is terminated. In step S2, the update control unit 31B also detects whether the user is operating the operation unit 16. If the user is operating the operation unit 16 (YES in step S2), the update control unit 31B executes step S2 until the user terminates the operation of the operation unit 16.

If neither the user is operating the operation unit 16 nor the cellular phone communication unit 14 is communicating with another terminal (NO in step S2), the update control unit 31B issues an update request (step S3). The update request is issued to ask the management station X if the software stored in the software storage unit 33A of the setting memory 33 is to be updated with the latest software. In step S3, the update control unit 31B first reads the version information "A1", "B1", "C1", "D1", and "E1" on the communication software, the electronic mail software, the game software, the anti spam mail software, and the tamper resistant software stored in the software storage unit 33A of the setting memory 33. Next, the update control unit 31B causes the cellular phone communication unit 14 to send an update request, including the version information "A1", "B1", "C1", "D1" and "E1", which has been read, to the management station terminal 1 of the management station X.

For example, assume that the management station terminal storage unit 1A of the management station terminal 1 stores the communication software, the electronic mail software, the game software, the anti spam mail software, and the tamper resistant software as the latest software as well as their version information "A1", "B1", "C1", "D1" and "E1".
In response to an update request from the cellular phone 10, the management station terminal execution unit 1B of the management station terminal 1 references the management station terminal storage unit 1A. The management station terminal execution unit 1B references the management station terminal storage unit 1A and finds that there is no version information on software to be updated for "A1", "B1", "C1", "D1" and "E1" included in the update request. The management station terminal execution unit 1B of the management station terminal 1 sends continuation information to the cellular phone 10 indicating that there is no software to be updated.
When the cellular phone communication unit 14 receives the continuation information from the management station terminal 1, the update control unit 31B of the cellular phone 10 terminates update processing (NO in step S4).

For example, the management station terminal storage unit 1A of the management station terminal 1 stores the communication software, the electronic mail software, the game software, the anti spam mail software, and the tamper resistant software as the latest software as well as their version information "A1", "B1", "C1", "D2" and "E1".
In response to an update request from the cellular phone 10, the management station terminal execution unit 1B of the management station terminal 1 references the management station terminal storage unit 1A. The management station terminal execution unit 1B references the management station terminal storage unit 1A and determines that, out of the version information "A1", "B1", "C1", "D1", and "E1" included in the update request, the version information "D2" is the version information on the software to be updated. The management station terminal execution unit 1B reads the determined version information "D2" as well as the latest anti spam mail software corresponding to the version information "D2" from the management station terminal storage unit 1A. The management station terminal execution unit 1B sends update information, which includes the latest anti spam mail software and the version information "D2" that have been read, to the cellular phone 10.
When the cellular phone communication unit 14 receives the update information (latest anti spam mail software and its version information "D2") from the management station terminal 1 (YES in step S4), the update control unit 31B of the cellular phone 10 stores the latest anti spam mail software and its version information "D2", included in the update information, into the software storage unit 33A of the setting memory 33 and terminates the update processing (step S5). That is, in step S5, the update control unit 31B updates the anti spam mail software (version information "D1") stored in the software storage unit 33A of the setting memory 33 with the latest anti spam mail software (version information "D2") included in the update information. As a result, the CPU 11 (software execution unit 31A stored in the ROM 31) executes the latest anti spam mail software stored in the software storage unit 33A of the setting memory 33 as necessary to ensure the proper operation of the cellular phone 10.

The effects of the update processing of the cellular phone 10 according to the present invention will be described.

A first effect of the cellular phone 10 according to the present invention is that software can be updated with the latest software via a simple operation.

The first effect will be described.
There is a possibility that a problem (bug, failure) occurs in the software stored in the software storage unit 33A. In this case, the maintenance of the software requires the user to update the software in the software storage unit 33A of the cellular phone 10 with the upgraded correction software (latest software). According to the cellular phone 10 of the present invention, the software in the software storage unit 33A is updated automatically with the latest software from the management station terminal 1 when the battery charger 6 is connected to the battery 9. This simple operation allows the user to update the software with the latest software. The simple operation only requires the user to connect the battery charger 6 to the battery 9.
The cellular phone 10 according to the present invention enables the user to simply update the software with the latest software, thus eliminating the need for user to go to a shop for replacing the cellular phone 10 with a new cellular phone. This reduces the cost required for correcting a problem, for example, the cost required for going to a shop or replacing the cellular phone with a new one.
The cellular phone 10 is a computer in which the CPU 11 is included. However, though all users of the cellular phone 10 use the cellular phone 10 as a phone, not all users cannot use the cellular phone 10 as a computer. Of all the users of the cellular phone 10, there must be some users who are unfamiliar with the operation of the cellular phone 10 as a computer. Thus, the cellular phone 10 according to the present invention allows such user to update the software with the latest software via a simple operation, eliminating the need for the user to detect a software problem (bug, failure).

A second effect of the cellular phone 10 according to the present invention is that software can be updated reliably.

The second effect will be described.
According to the cellular phone 10 of the present invention, the software in the software storage unit 33A is updated automatically with the latest software from the management station terminal 1 when the battery charger 6 is connected to the battery 9. Usually, when connected to the external power supply 7 and to the battery 9, the battery charger 6 charges the battery 9. When the battery charger 6 and the battery 9 are connected, the battery charger 6 and external power supply 7 are not connected in some cases. The battery charger 6 and the external power supply 7 are not connected, for example, when the battery charger 6 is not connected correctly to the external power supply 7 or when the power from the external power supply 7 is not supplied to the battery charger 6 due to a power failure. In this case, when connected to the battery 9 but not to the external power supply 7, the battery charger 6 cannot charge the battery 9. According to the cellular phone 10 of the present invention, the software can be updated reliably with the latest software even if the battery charger 6 is not charging the battery 9 when the battery charger 6 is connected to the battery 9.

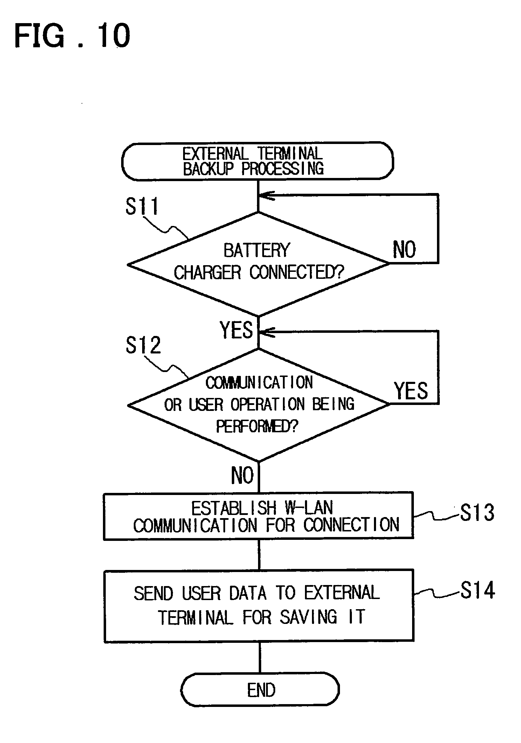

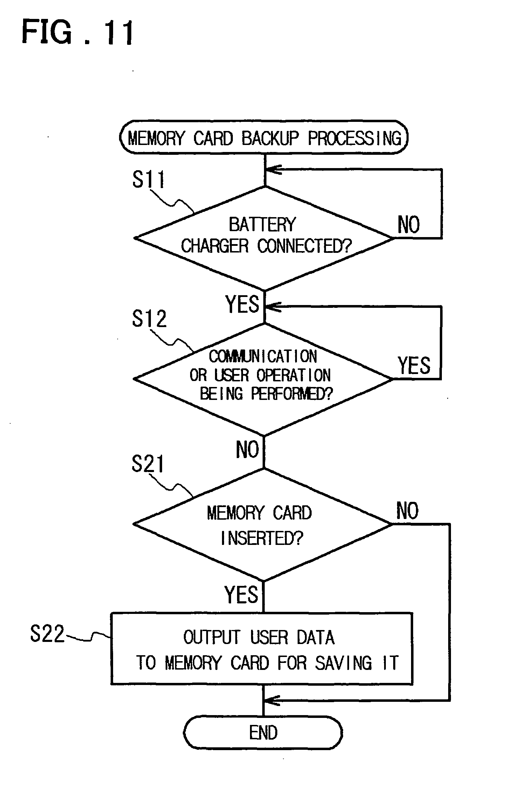

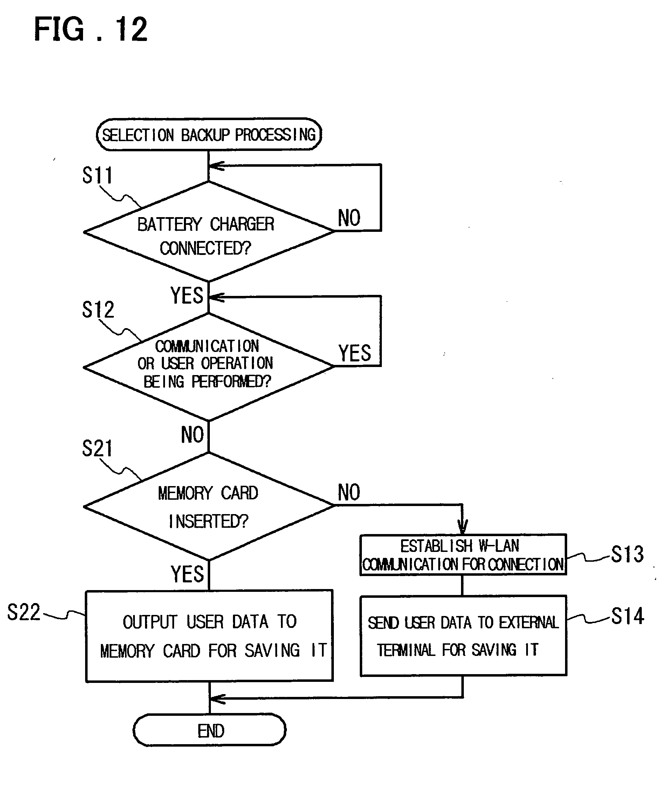

Next, the backup processing (external terminal backup processing, memory card backup processing, and selection backup processing) will be described. FIG. 10 is a flowchart showing external terminal backup processing included in the backup processing executed as one of operations of the cellular phone 10 of the present invention. FIG. 11 is a flowchart showing memory card backup processing included in the backup processing executed as one of operations of the cellular phone 10 of the present invention. FIG. 12 is a flowchart showing selection backup processing included in the backup processing executed as one of operations of the cellular phone 10 of the present invention.

If the battery charger 6 remains connected to the charger connection unit 23 even after the update processing described above is finished, the charger connection detection unit 22 outputs the charger connection detection signal to the CPU 11 while the battery charger 6 remains connected to the charger connection unit 23 (YES in step S11 in FIGS. 10-12). If control is passed to YES in step S11, the CPU 11 starts the backup control unit 31C stored in the ROM 31 if the charger connection detection signal is received from the charger connection detection unit 22 even after the update processing described above is finished. In this case, the backup control unit 31C references the flags that are set in the backup location setting unit 31E in the ROM 31 to determine one of the following processing: (1) external terminal backup processing, (2) memory card backup processing, and (3) selection backup processing.
(1) If only the external terminal flag is set in the backup location setting unit 31E, the backup control unit 31C executes the external terminal backup processing shown in FIG. 10.

The backup control unit 31C detects whether the cellular phone communication unit 14 is communicating with another terminal (step S12). If the cellular phone communication unit 14 is communicating with another terminal (YES in step S12), the backup control unit 31C executes step S12 until the cellular phone communication unit 14 terminates the communication with the other terminal. In step S12, the backup control unit 31C also detects if the user is operating the operation unit 16. If the user is operating the operation unit 16 (YES in step S12), the backup control unit 31C executes step S12 until the user terminates the operation on the operation unit 16.

If neither the user is operating the operation unit 16 nor the cellular phone communication unit 14 is communicating with another terminal (NO in step S12), the backup control unit 31C reads the address of the external terminal 4 from the user data storage unit 33B of the setting memory 33 and causes the W-LAN backup communication unit 15-1 to establish communication with the external terminal 4 (step S13).

When communication with the external terminal 4 is established, the backup control unit 31C reads a user data item as well as user data corresponding to the user data item from the user data storage unit 33B of the setting memory 33. The backup control unit 31C causes the W-LAN backup communication unit 15-1 to send a saving request, which includes the user data item and the user data that are read, to the external terminal 4 (step S14). This saving request further includes the address of the cellular phone 10.
In step S14, the external terminal execution unit 4B of the external terminal 4 receives the saving request from the cellular phone 10, establishes the correspondence among the address of the cellular phone 10, the user data item, and the user data which are included in the saving request, and stores them in the external terminal storage unit 4A.
After executing step S14, the backup control unit 31C terminates the external terminal backup processing.

(2) If only the memory card flag is set in the backup location setting unit 31E, the backup control unit 31C executes the memory card backup processing shown in FIG. 11.

The backup control unit 31C executes the step S12 described above.

If neither the user is operating the operation unit 16 nor the cellular phone communication unit 14 is communicating with another terminal (NO in step S12), the backup control unit 31C detects if the memory card 5 is mounted (inserted) into the memory card slot 54 of the memory card backup communication unit 15-2 (step S21)

If the memory card 5 is not inserted into the memory card slot 54, the backup control unit 31C terminates the memory card backup processing (NO in step S21).

If the memory card 5 is inserted into the memory card slot 54 (YES in step S21), the backup control unit 31C reads a user data item as well as user data corresponding to the user data item from the user data storage unit 33B of the setting memory 33. The backup control unit 31C outputs (sends) the user data item and the user data, which are read, to the memory card 5 via the memory card backup communication unit 15-2. In this case, the backup control unit 31C associates the user data item and the user data, output from the memory card backup communication unit 15-2 to the memory card 5, and stores them in the memory card storage unit 5A of the memory card 5 (step S22).
After executing step S22, the backup control unit 31C terminates the memory card backup processing.

(3) If the external terminal flag and the memory card flag are set in the backup location setting unit 31E, the backup control unit 31C executes the selection backup processing shown in FIG. 12.

The backup control unit 31C executes step S12 described above.

If neither the user is operating the operation unit 16 nor the cellular phone communication unit 14 is communicating with another terminal (NO in step S12), the backup control unit 31C executes step S21 described above.

If the memory card 5 is not inserted into the memory card slot 54 (NO in step S21), the backup control unit 31C executes steps S13 and S14 described above and terminates the external terminal backup processing.

If the memory card 5 is inserted into the memory card slot 54 (YES in step S21), the backup control unit 31C executes step S22 described above and terminates the memory card backup processing.

The effects of the backup processing (external terminal backup processing, memory card backup processing, selection backup processing) in the cellular phone 10 according to the present invention will be described.

A third effect of the cellular phone 10 according to the present invention is that user data can be backed up in a simple operation.

The third effect will be described.
Considering that a problem may occur in the cellular phone 10, user data stored in the user data storage unit 33B must be backed up. According to the cellular phone 10 of the present invention, user data is read from the user data storage unit 33B when the battery charger 6 is connected to the battery 9 and is automatically backed up into a storage unit (external terminal 4, memory card 5). This allows the user to back up user data in a simple operation. This simple operation only requires the user to connect the battery charger 6 to the battery 9. Of all users of the cellular phone 10, there must be some users who are unfamiliar with the operation of the cellular phone 10 as a computer. Even those users can back up user data in a simple operation simply by connecting the battery charger 6 to the battery 9.

A fourth effect of the cellular phone 10 according to the present invention is that user data can be backed up reliably.

The fourth effect will be described.
In the prior art described in Patent Document 1, the cellular phone backs up user data into the backup processing unit when the battery is charged with the battery charger. However, when the battery charger is not connected correctly to the external power supply or when the power from the external power supply is not supplied to the battery charger due to a power failure, the battery cannot be charged if the battery charger is connected to the battery but not to the external power supply. When the battery cannot be charged, the cellular phone cannot back up user data reliably.
By contrast, according to the cellular phone 10 of the present invention, user data is read from the user data storage unit 33B and is automatically backed up into a storage unit (external terminal 4, memory card 5) even if the battery charger 6 is not charging the battery 9 when the battery charger 6 is connected to the battery 9. Thus, according to the cellular phone 10 of the present invention, user data can be backed up reliably when the battery charger 6 is connected to the battery 9.

A fifth effect of the cellular phone 10 according to the present invention is that even users unfamiliar with a computer can use backed up user data.

The fifth effect will be described.
In the prior art described in Patent Documents 2-4, user data is backed up not with a general-purpose battery charger but with a special-purpose battery charger that is not for general purposes. When connected to the battery of a cellular phone, this special-purpose battery charger, which contains a memory, backs up user data into the memory of the special-purpose battery charger. Of all cellular phone users, there must be some users who are unfamiliar with a computer. Users who are unfamiliar with a computer cannot always use user data, stored in the memory of the special-purpose battery charger, using the special-purpose battery charger that is not for general purposes.
By contrast, according to the cellular phone 10 of the present invention, user data is backed up using the general-purpose battery charger 6 and the general-purpose storage units 4 and 5. When the general-purpose battery charger 6 is connected to the battery 9, this cellular phone 10 reads user data from the user data storage unit 33B and automatically backs it up into the general-purpose storage unit (external terminal 4, memory card 5). Thus, even those users who are unfamiliar with a computer can use user data stored in the storage unit (external terminal 4, memory card 5) using a general-purpose storage unit (external terminal 4, memory card 5).

Although the cellular phone 10 executes the backup processing after the update processing in this embodiment, it is also possible to execute the update processing after executing the backup processing.
In this case, the charger connection detection unit 22 of the battery power control unit 12 detects if the user connects the battery charger 6 to the charger connection unit 23 during the backup processing (step S11). When the battery charger 6 is connected to the charger connection unit 23, the charger connection detection unit 22 outputs the charger connection detection signal to the CPU 11 while the battery charger 6 remains connected to the charger connection unit 23 (YES in step S11). If control is passed to YES in step S11 and the charger connection detection signal is received from the charger connection detection unit 22, the CPU 11 starts the backup control unit 31C stored in the ROM 31 to cause the backup control unit 31C to execute the backup processing.
When the battery charger 6 remains connected to the charger connection unit 23 even after the backup processing described above is finished, the charger connection detection unit 22 outputs the charger connection detection signal to the CPU 11 while the battery charger 6 remains connected to the charger connection unit 23 (YES in step S1). If control is passed to YES in step S1 and if the charger connection detection signal is received from the charger connection detection unit 22 even after the above backup processing is terminated, the CPU 11 starts the update control unit 31B stored in the ROM 31 to cause the update control unit 31B to execute the update processing.

Although a W-LAN is shown as an example of the wireless network 3, the wireless network 3 may be or comprise a network using the Bluetooth technology.
In this case, the backup communication unit 15 comprises a Bluetooth communication system or unit, not shown, instead of (or additionally) the W-LAN backup communication unit 15-1. The Bluetooth communication unit comprises a Bluetooth control unit not shown and a Bluetooth transmission/reception unit not shown.
The Bluetooth control unit is connected to the bus 19. The Bluetooth transmission/reception unit is connected to the Bluetooth control unit. The external terminal 4 is connected to the Bluetooth transmission/reception unit via the wireless network 3. The Bluetooth transmission/reception unit is a circuit for sending and receiving data to and from the wireless network 3. The Bluetooth control unit causes the Bluetooth transmission/reception unit to send data in response to an instruction from the CPU 11. The Bluetooth control unit causes the Bluetooth transmission/reception unit to receive data and output it to the CPU 11.
When the wireless network 3 uses the Bluetooth technology, the Bluetooth communication unit is used, instead of the W-LAN backup communication unit 15-1, for the external terminal backup processing and the selection backup processing described above.

As described above, the cellular phone 10 according to the present invention allows the user to update software with the latest software in a simple operation.

The cellular phone 10 according to the present invention allows the user to update software with the latest software reliably.

The cellular phone 10 according to the present invention allows the user to back up user data in a simple operation.

The cellular phone 10 according to the present invention allows the user to back up user data reliably.

The cellular phone 10 according to the present invention allows even a user unfamiliar with a computer to use backed-up user data.
It should be noted that other objects, features and aspects of the present invention will become apparent in the entire disclosure and that modifications from the disclosed embodiments may be done without departing the scope of the present invention claimed as appended herewith.
Also it should be noted that any combination of the disclosed and/or claimed elements, matters and/or items may fall under the above modifications.

## Claims

1. A cellular phone comprising:
a cellular phone body; and
a battery that supplies battery power to said cellular phone body and that is connectable to a battery charger, wherein
said battery charger charges said battery when connected to an external power supply and said battery,
said cellular phone body comprising:
a software storage unit in which software is stored;
a cellular phone communication unit which is connectable to a management station terminal via a wireless communication network, said management station terminal providing latest software in response to an update request; and
an update control unit that sends the update request from said cellular phone communication unit to said management station terminal and stores the latest software, sent from said management station terminal to said cellular phone communication unit, into said software storage unit as the software when said battery charger is connected to said battery.

2. A cellular phone comprising:
a cellular phone body; and
a battery that supplies battery power to said cellular phone body and that is connectable to a battery charger, wherein
said battery charger charges said battery when connected to an external power supply and said battery,
said cellular phone body comprising:
a software storage unit in which software is stored;
a cellular phone communication unit to be connected to a management station terminal via a wireless communication network, said management station terminal providing latest software in response to an update request;
an update control unit that sends the update request from said cellular phone communication unit to said management station terminal and stores the latest software, sent from said management station terminal to said cellular phone communication unit, into said software storage unit as the software when said battery charger is connected to said battery;
a user data storage unit in which user data related to a user is stored;
a backup communication unit connected to a storage unit; and
a backup control unit that reads the user data from said user data storage unit, sends the user data from said backup communication unit to said storage unit, and stores the user data therein when said battery charger is connected to said battery.

3. The cellular phone as defined by claim 1 or 2 wherein
said cellular phone communication unit is connected to some other terminal via said wireless communication network and,
wherein, if said cellular phone communication unit is not communicating with said other terminal when said battery charger is connected to said battery, said update control unit sends the update request from said cellular phone communication unit to said management station terminal and stores the latest software, sent from said management station terminal to said cellular phone communication unit, into said software storage unit as the software.

4. The cellular phone as defined by claim 3 wherein
said cellular phone body further comprises an operation unit provided for a user to operate said cellular phone body and
wherein, if neither the user is operating said operation unit nor said cellular phone communication unit is communicating with said other terminal when said battery charger is connected to said battery, said update control unit sends the update request from said cellular phone communication unit to said management station terminal and stores the latest software, sent from said management station terminal to said cellular phone communication unit, into said software storage unit as the software.

5. The cellular phone as defined by claim 2 wherein
said cellular phone communication unit is connectable to some other terminal via said wireless communication network and
wherein, if said cellular phone communication unit is not communicating with said other terminal when said battery charger is connected to said battery,
said update control unit sends the update request from said cellular phone communication unit to said management station terminal and stores the latest software, sent from said management station terminal to said cellular phone communication unit, into said software storage unit as the software, and
said backup control unit reads the user data from said user data storage unit, sends the user data from said backup communication unit to said storage unit, and stores the user data therein.

6. The cellular phone as defined by claim 5 wherein
said cellular phone body further comprises an operation unit provided for a user to operate said cellular phone body, and
wherein, if neither the user is operating said operation unit nor said cellular phone communication unit is communicating with said other terminal when said battery charger is connected to said battery, said update control unit sends the update request from said cellular phone communication unit to said management station terminal and stores the latest software, sent from said management station terminal to said cellular phone communication unit, into said software storage unit as the software, and
said backup control unit reads the user data from said user data storage unit, sends the user data from said backup communication unit to said storage unit, and stores the user data therein.

7. The cellular phone as defined by one of claims 2, 5 and 6 wherein
said storage unit is an external terminal to be connected to said backup communication unit via a wireless network,
said external terminal comprises an external terminal storage unit, and
the user data sent from said backup communication unit to said external terminal is stored in said external terminal storage unit by said external terminal.

8. The cellular phone as defined by one of claims 2, 5 and 6 wherein
said backup communication unit comprises a memory card slot,
said storage unit is a memory card mounted in said memory card slot
said memory card comprises a memory card storage unit, and
the user data sent from said backup communication unit to said memory card is stored into said memory card storage unit by said backup control unit.

9. The cellular phone as defined by claim 5 wherein
said backup communication unit comprises a memory card slot,
wherein said storage unit comprises:
an external terminal that is connectable to said backup communication unit via a wireless network and that comprises an external terminal storage unit; and
a memory card that can be mounted in said memory card slot and that comprises a memory card storage unit,
wherein, if neither said cellular phone communication unit is communicating with said the other terminal nor said memory card is mounted in said memory card slot when said battery charger is connected to said battery, said backup control unit reads the user data from said user data storage unit and sends the user data to said external terminal via said backup communication unit, and
the user data sent from said backup communication unit to said external terminal is stored into said external terminal storage unit by said external terminal, and
wherein, if said cellular phone communication unit is not communicating with said other terminal but said memory card is mounted in said memory card slot when said battery charger is connected to said battery, said backup control unit reads the user data from said user data storage unit, sends the user data to said memory card via said backup communication unit, and stores the user data into said memory card storage unit.

10. The cellular phone as defined by claim 6 wherein
said backup communication unit comprises a memory card slot,
wherein said storage unit comprises:
an external terminal that is connectable to said backup communication unit via a wireless network and that comprises an external terminal storage unit; and
a memory card that can be mounted in said memory card slot and that comprises a memory card storage unit
wherein, if neither a user is operating said operation unit, nor said cellular phone communication unit is communicating with said the other terminal, nor said memory card is mounted in said memory card slot when said battery charger is connected to said battery, said backup control unit reads the user data from said user data storage unit and sends the user data to said external terminal via said backup communication unit, and
the user data sent from said backup communication unit to said external terminal is stored into said external terminal storage unit by said external terminal, and
wherein, if neither a user is operating said operation unit nor said cellular phone communication unit is communicating with said other terminal but said memory card is mounted in said memory card slot when said battery charger is connected to said battery ,said backup control unit reads the user data from said user data storage unit, sends the user data to said memory card via said backup communication unit, and stores the user data into said memory card storage unit.

11. The cellular phone as defined by one of claims 7, 9 and 10 wherein
said wireless communication network comprises a Wireless Local Area Network W-LAN.

12. The cellular phone as defined by one of claims 7, 9 and 10 wherein
said wireless communication network is applied to Bluetooth system.

13. A communication system comprising:
a cellular phone; and
a management station terminal providing latest software in response to an update request, wherein
said cellular phone comprises:
a cellular phone body; and
a battery that supplies battery power to said cellular phone body and that is connectable to a battery charger,
said battery charger charges said battery when connected to an external power supply and said battery,
said cellular phone body comprising:
a software storage unit in which software is stored;
a cellular phone communication unit connectable to said management station terminal via a wireless communication network; and
an update control unit that sends the update request from said cellular phone communication unit to said management station terminal and stores the latest software, sent from said management station terminal to said cellular phone communication unit, into said software storage unit as the software when said battery charger is connected to said battery.

14. A communication system comprising:
a cellular phone;
a management station terminal providing latest software in response to an update request; and
a storage unit, wherein
said cellular phone comprises:
a cellular phone body; and
a battery that supplies battery power to said cellular phone body and that is connectable to a battery charger,
said battery charger charges said battery when connected to an external power supply and said battery,
said cellular phone body comprising:
a software storage unit in which software is stored;
a cellular phone communication unit connected to said management station terminal via a wireless communication network;
an update control unit that sends the update request from said cellular phone communication unit to said management station terminal and stores the latest software, sent from said management station terminal to said cellular phone communication unit, into said software storage unit as the software when said battery charger is connected to said battery;
a user data storage unit in which user data related to a user is stored;
a backup communication unit connectable to said storage unit; and
a backup control unit that reads the user data from said user data storage unit, sends the user data from said backup communication unit to said storage unit, and stores the user data therein when said battery charger is connected to said battery.

15. The communication system as defined by claim 13 or 14 wherein
said cellular phone communication unit is connectable to some other terminal via said wireless communication network and,
wherein, if said cellular phone communication unit is not communicating with said other terminal when said battery charger is connected to said battery, said update control unit sends the update request from said cellular phone communication unit to said management station terminal and stores the latest software, sent from said management station terminal to said cellular phone communication unit, into said software storage unit as the software.

16. The communication system as defined by claim 15 wherein
said cellular phone body further comprises an operation unit provided for a user to operate said cellular phone body and
wherein, if neither the user is operating said operation unit nor said cellular phone communication unit is communicating with said other terminal when said battery charger is connected to said battery, said update control unit sends the update request from said cellular phone communication unit to said management station terminal and stores the latest software, sent from said management station terminal to said cellular phone communication unit, into said software storage unit as the software.

17. The communication system as defined by claim 14 wherein
said cellular phone communication unit is connectable to some other terminal via said wireless communication network and
wherein, if said cellular phone communication unit is not communicating with said other terminal when said battery charger is connected to said battery,
said update control unit sends the update request from said cellular phone communication unit to said management station terminal and stores the latest software, sent from said management station terminal to said cellular phone communication unit, into said software storage unit as the software, and
said backup control unit reads the user data from said user data storage unit, sends the user data from said backup communication unit to said storage unit, and stores the user data therein.

18. The communication system as defined by claim 17 wherein
said cellular phone body further comprises an operation unit provided for a user to operate said cellular phone body, and
wherein, if neither the user is operating said operation unit nor said cellular phone communication unit is communicating with said other terminal when said battery charger is connected to said battery, said update control unit sends the update request from said cellular phone communication unit to said management station terminal and stores the latest software; sent from said management station terminal to said cellular phone communication unit, into said software storage unit as the software and
said backup control unit reads the user data from said user data storage unit, sends the user data from said backup communication unit to said storage unit, and stores the user data therein.

19. The communication system as defined by one of claims 14, 17 and 18 wherein
said storage unit is an external terminal connectable to said backup communication unit via a wireless network,
said external terminal comprises an external terminal storage unit, and
the user data sent from said backup communication unit to said external terminal is stored in said external terminal storage unit by said external terminal.

20. The communication system as defined by one of claims 14, 17 and 18 wherein
said backup communication unit comprises a memory card slot,
said storage unit is a memory card mounted in said memory card slot
said memory card comprises a memory card storage unit, and
the user data sent from said backup communication unit to said memory card is stored into said memory card storage unit by said backup control unit.

21. The communication system as defined by claim 17 wherein
said backup communication unit comprises a memory card slot,
wherein said storage unit comprises:
an external terminal that is connectable to said backup communication unit via a wireless network and that comprises an external terminal storage unit; and
a memory card that can be mounted in said memory card slot and that comprises a memory card storage unit,
wherein, if neither said cellular phone communication unit is communicating with said the other terminal nor said memory card is mounted in said memory card slot when said battery charger is connected to said battery, said backup control unit reads the user data from said user data storage unit and sends the user data to said external terminal via said backup communication unit, and
the user data sent from said backup communication unit to said external terminal is stored into said external terminal storage unit by said external terminal, and
wherein, if said cellular phone communication unit is not communicating with said other terminal but said memory card is mounted in said memory card slot when said battery charger is connected to said battery, said backup control unit reads the user data from said user data storage unit, sends the user data to said memory card via said backup communication unit, and stores the user data into said memory card storage unit.

22. The communication system as defined by claim 18 wherein
said backup communication unit comprises a memory card slot,
wherein said storage unit comprises:
an external terminal that is connectable to said backup communication unit via a wireless network and that comprises an external terminal storage unit; and
a memory card that can be mounted in said memory card slot and that comprises a memory card storage unit
wherein, if neither a user is operating said operation unit, nor said cellular phone communication unit is communicating with said the other terminal, nor said memory card is mounted in said memory card slot when said battery charger is connected to said battery, said backup control unit reads the user data from said user data storage unit and sends the user data to said external terminal via said backup communication unit, and
the user data sent from said backup communication unit to said external terminal is stored into said external terminal storage unit by said external terminal, and
wherein, if neither a user is operating said operation unit nor said cellular phone communication unit is communicating with said other terminal but said memory card is mounted in said memory card slot when said battery charger is connected to said battery ,said backup control unit reads the user data from said user data storage unit, sends the user data to said memory card via said backup communication unit, and stores the user data into said memory card storage unit.

23. The communication system as defined by one of claims 19, 21 and 22 wherein
said wireless communication network comprises a Wireless Local Area Network W-LAN.

24. The communication system as defined by one of claims 19, 21 and 22 wherein
said wireless communication network is applied to Bluetooth system.
